# EUROPEAN PATENT SPECIFICATION

(11) **EP 4 549 774 B1**
(45) Date of publication and mention of the grant of the patent: **22.04.2026**
(21) Application number: 23207149.8
(22) Date of filing: 31.10.2023
(51) Int. Cl.: F16F 7/08, F16F 7/09, D06F 37/20

(54) **A FRICTIONAL DAMPER WITH LINEAR ACTUATOR**
REIBUNGSDÄMPFER MIT LINEARANTRIEB
AMORTISSEUR À FRICTION AVEC ACTIONNEUR LINÉAIRE

(43) Date of publication of application: 07.05.2025
(73) Proprietor: Aksistem Elektromekanik Sanayi ve Ticaret Ltd. Sti., Cerkezkoy/Tekirdag (TR)
(72) Inventor: KANIOZ, Can, Tekirdag (TR)
(74) Representative: Genç Ilhan, Oznur

(56) References cited:
- EP-A1- 3 193 038
- EP-B1- 2 569 554
- US-A1- 2008 256 986
- US-A1- 2015 354 653

## Description

### Technical Field of the Invention

The present invention relates to a frictional damper, in other words, a frictional shock absorber with a linear actuator for washing or drying machines having rotating drums.

### Background of the Invention

When a washing or drying machine goes through various cycles, such as spinning or agitating, it can generate significant vibrations and movement. These vibrations can not only create noise but also cause the machine to shift or move around. This can cause a damage or other inconveniences.

Dampers (also known as shock absorbers or washing machine suspension legs) help to mitigate these issues by absorbing and dampening the vibrations and shocks. Washing machine or drying machine dampers absorb drum movements, dissipate energy and reduce the impact of the machine's movements on its surroundings.

For this reason, dampers in washing or drying machines play a crucial role in stabilizing the machine, minimizing noise, and preventing excessive movement during operation.

Document US 2008/256986 A1 discloses a prior art friction damper for washing or drying machines disclosing the features of the pre-amble of claim 1.

In the state of the art, dampers comprise a tubular hollow body and a rod which can reciprocate inside the hollow body. A seat positioned on an open end of the hollow body comprises a cylindrical friction member which encircles the rod of the damper. During the reciprocating motion, the rod comes into contact with the cylindrical friction member and dissipates its energy. This energy dissipation is influenced by the tightness of the grip between the cylindrical friction member and the rod, essentially determined by inner radius of the friction member. However, the relationship between the generated friction force (the energy dissipation) and the radius of the friction member exhibits a wide tolerance range, often around ±20% or even higher.

For example, aiming to create a damper with a 100N friction force could result in a damper actually exhibiting 80N or 120N of friction force due to the mentioned wide tolerance range. In a typical washing machine, there are usually 2-5 dampers present. Using dampers in a washing or drying machine with varying energy absorptions can lead to vibrations that cause unwanted noise. Adjusting the energy absorption of a damper necessitates changing the cylindrical friction member and/or the seat with another one. Yet, even with this change, there's no assurance of achieving the desired energy absorption level for the damper.

Furthermore, the inability to adjust the friction force of conventional washing or drying machines dampers cause to store dampers with varying friction forces which significantly increases the burden of storage costs.

Moreover, certain cycles of the washing or drying machine, such as high-speed spinning, requires a reduction or complete elimination of the damping force. For this reason, depending on the specific cycle, the damper's damping force must be adjustable providing specifically to switch between a minimum and a maximum level.

Since the aforementioned drawbacks of the known washing machine dampers, there is need for a damper permitting the adjustment or calibration of damping force.

### Brief Description of the Drawings

The accompanying drawings are given solely for the purpose of exemplifying an embodiment of the invention which will be explained in detail hereinafter:
**Figure 1** is a side view of the friction damper in one exemplary embodiment of the present invention.

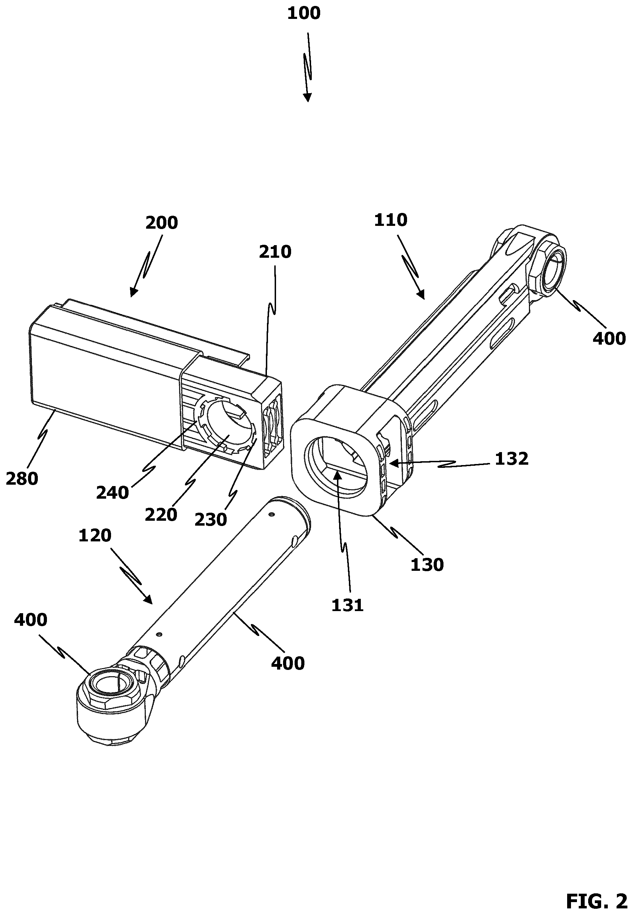

**Figure 2** is an exploded isometric view of the friction damper comprising a hollow body, a damping rod and a friction unit in one exemplary embodiment of the present invention.
**Figure 3** is a side cross-sectional view of the friction damper as in Fig. 1 in one exemplary embodiment of the present invention.
**Figure 4** is an exploded view of the friction damper in one exemplary embodiment of the present invention.
**Figure 5** is an isometric view of a unit body in one exemplary embodiment of the present invention.
**Figure 6** is a side view of a unit body in one exemplary embodiment of the present invention.

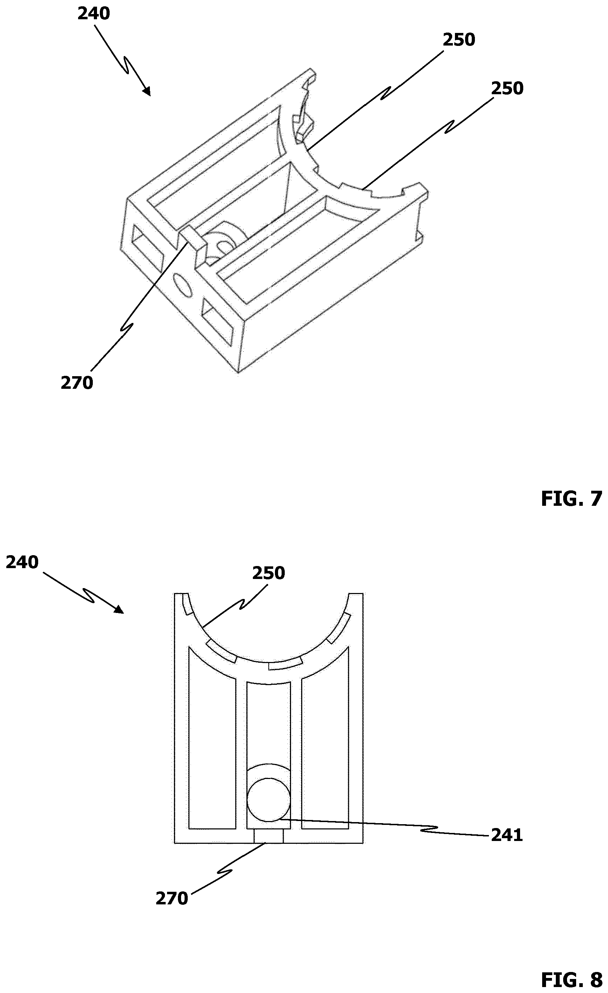

**Figure 7** is an isometric view of a slidable pressure element in one exemplary embodiment of the present invention.
**Figure 8** is a top view of a slidable pressure element in one exemplary embodiment of the present invention.
**Figure 9** is an isometric view of a travelling nut in one exemplary embodiment of the present invention.
**Figure 10** is an isometric view of a circuit board having a first push-button switch and a second push-button switch in one exemplary embodiment of the present invention.
**Figure 11** is a side cross-sectional view of the friction damper having two slidable circuit boards in another exemplary embodiment of the present invention.
**Figure 12** is an exploded view of the friction damper having two slidable circuit boards and two friction members in one exemplary embodiment of the present invention.
**Figure 13** is an exploded view of the friction unit having two slidable circuit boards and two friction members in one exemplary embodiment of the present invention.
**Figure 14** is an isometric view of a unit body having two board guides in one exemplary embodiment of the present invention.
**Figure 15** is a side view of a unit body having two board guides in one exemplary embodiment of the present invention.

The elements illustrated in the figures are numbered as follows:
100. Friction damper
   110. Hollow body
   120. Damping rod
   130. Holder
      131. Circular opening
      132. Side opening
200. Friction unit
   210. Unit body
      211. Actuator housing
      222. Board guide
      223. Rotor end inlet
   220. Friction member
   230. Stationary pressure element
   240. Slidable pressure element
      241. Travelling nut
      242. Internal threads
   250. Retainer protrusions
   260. Linear actuator
      261. Threaded rotor end
   270. Push abutment
      271. First push-button switch
      272. Second push-button switch
      273. Circuit board
      274. Switch bracket
   280. Outer cover
      281. Cover fastener
300. Connection member
400. Anchoring member

### Detailed Description of the Invention

Embodiments of the present invention relates to a friction damper (100) suitable for washing machines or drying machines. The friction damper (100) comprises a tubular hollow body (110) and a damping rod (120) arranged coaxially with respect to one another for moving along each other telescopically. The damping rod (120) has an outer diameter less than an inner diameter of the hollow body (110). So, the damping rod (120) can perform a telescopic reciprocating motion within the hollow body (110).

The hollow body (110) comprises a holder (130) for holding a friction unit (200). The friction unit (200) comprises a unit body (210), at least one friction member (220), a stationary pressure element (230), a slidable pressure element (240), a linear actuator (260) and a connection member (300). The friction member (220) is inside the unit body (210). The friction member (220) is slidably coupled to the damping rod (120) for generating a friction force onto the damping rod (120). The stationary pressure element (230) is surrounding at least a part of the friction member (220). The slidable pressure element (240) is for surrounding at least another part of the friction member (220). The friction member (220) is positioned between the stationary pressure element (230) and the slidable pressure element (240). The slidable pressure element (240) is slidable towards and away from the stationary pressure element (230) for exerting a pressure to the friction member (220). The linear actuator (260) is fixed to the unit body (210) for providing a sliding motion to the slidable pressure element (240). The connection member (300) is for powering (and/or controlling) the linear actuator (260).

The spacing/the distance between the stationary pressure element (230) and the slidable pressure element (240) can be adjustable/modifiable by the sliding motion of the slidable pressure element (240). The sliding motion of the slidable pressure element (240) towards the stationary pressure element (230) squeezes the friction member (220) and reverse motion of the slidable pressure element (240) relaxes the friction member (220). The sliding motion of the slidable pressure element (240) is provided by the linear actuator (260). The closeness between the stationary pressure element (230) and the slidable pressure element (240) directly influences the magnitude of the applied pressure force on the friction member (220). The damping rod (120) is frictionally (so as to create a friction) slidable over the friction member (220). Thus, the damping force to the damping rod (120) is directly proportional to the applied pressure force on the friction member (220). As the distance between the stationary pressure element (230) and the slidable pressure element (240) decreases, the exerted pressure increases. This pressure applied by both the stationary pressure element (230) and the slidable pressure element (240) compresses the friction member (220). The stationary pressure element (230) and the slidable pressure element (240) might compress the friction member (220) from its (the friction member (220)) sides. As this exerted pressure on the friction member (220) increases, the resultant frictional force, which is the damping force, applied to the damping rod (120) also increases. The distance between the stationary pressure element (230) and the slidable pressure element (240) can be reduced by sliding the slidable pressure element (240) towards the stationary pressure element (230). Similarly, the distance between the stationary pressure element (230) and the slidable pressure element (240) can be increased by sliding the slidable pressure element (240) away from the stationary pressure element (230). In simpler terms, sliding the slidable pressure element (240) towards the stationary pressure element (230) leads to a greater frictional force being generated on the damping rod (120).

Exerting pressure to the friction member (220) by the sliding the slidable pressure element (240) towards the stationary pressure element (230) is particularly important. Sliding motion of the slidable pressure element (240) provides that the friction member (220) can be compressed evenly throughout its surrounding surface. The force exerted by the slidable pressure element (240) and the stationary pressure element (230) to the friction member (220) is evenly distributed by the corresponding parts surrounding the friction member (220). Achieving uniform and evenly distributed force on the friction member (220) in a single straight-line direction (the sliding direction of the slidable pressure element (240)) is not possible without the sliding motion. For example, exerting a force to the friction member (220) by hinged clamping motion of a pressure element such as a hinge clamp cannot be evenly distributed to the surface of the friction member (220). The force applied to a part of the friction member (220) close to the hinge is always bigger than the other parts of the friction member (220).

The friction member (220) is adapted for being positioned between the stationary pressure element (230) and the slidable pressure element (240). In one embodiment of the invention, to enhance the secure positioning of the friction member (220) between the stationary pressure element (230) and the slidable pressure element (240), the stationary pressure element (230) and/or the slidable pressure element (240) is provided with retainer protrusions (250).

Thereby, the friction member (220) is securely positioned both between the stationary pressure element (230) and the slidable pressure element (240) in the direction of the sliding motion, and between the retainer protrusions (250) in the direction orthogonal to the sliding motion.

In one embodiment of the invention, the holder (130) is positioned at one end of the tubular hollow body (110). This positioning of the holder (130) ensures that the friction member (220) remains easily visible. The holder (130) also comprises a circular opening (131) for receiving the damping rod (120) and at least one side opening (132) for receiving the friction unit (200). The side opening (132) might be adapted to position the friction unit (200) substantially orthogonal to the hollow body (110). The circular opening (131), side opening (132) and together with the position of the holder (130) simplifies the assembly process when connecting the damping rod (120) with the friction member (220) which requires a frictional and sliding connection.

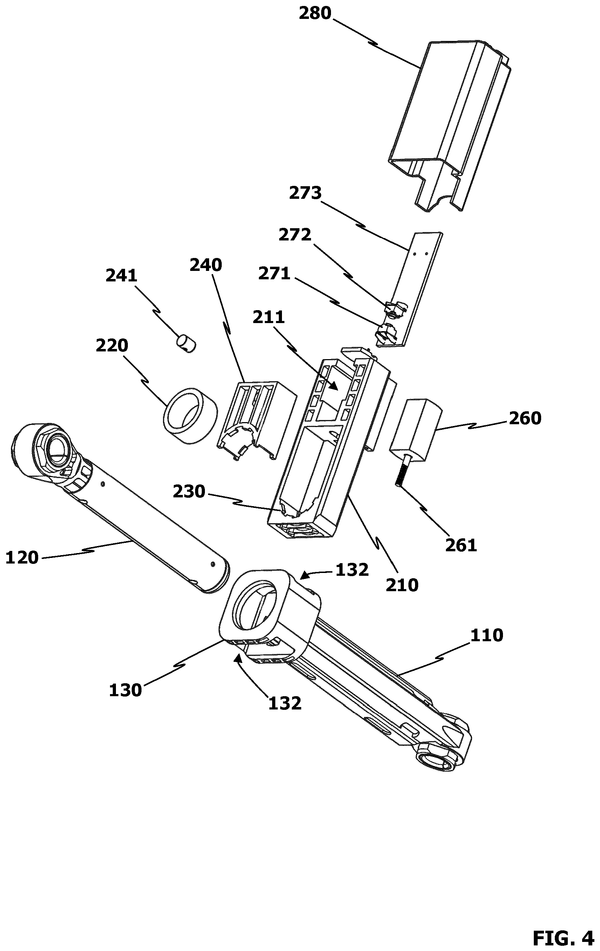

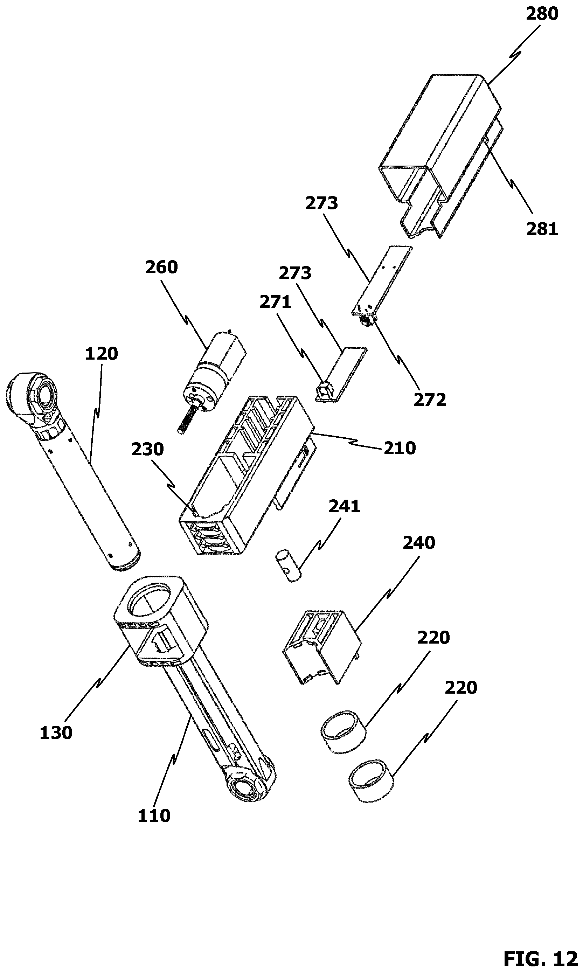

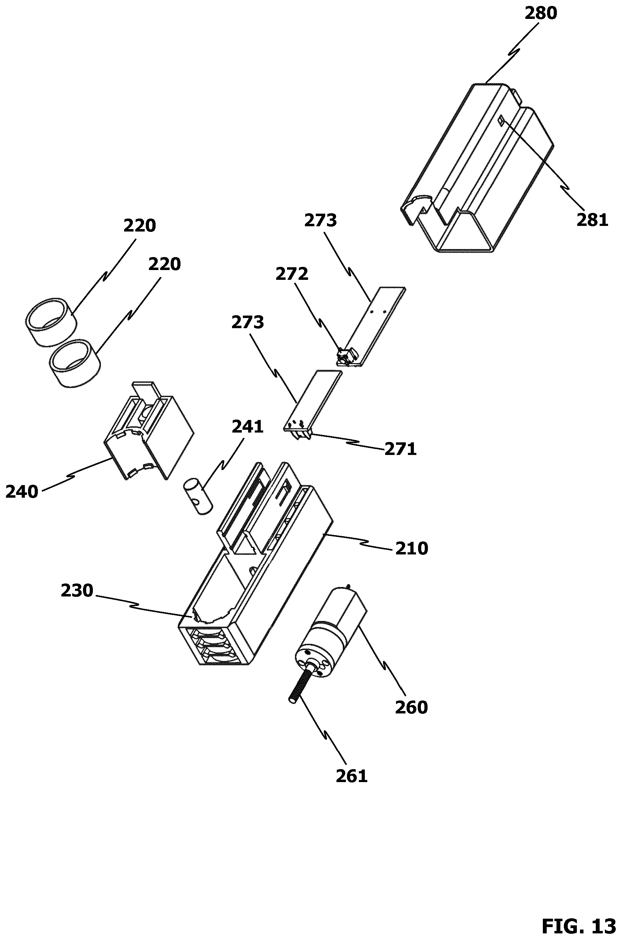

In one embodiment of the invention, the friction member (220) has a cylindrical form (see Fig. 4, 12-13) which encircles at least a part of the damping rod (120). In one alternative embodiment of this embodiment, the stationary pressure element (230) and/or the slidable pressure element (240) have a concave inner surface, such as C shaped, facing the friction member (220). The contour of the concave inner surface, such as inner surface of the C shape, is match with a convex outer surface of the cylindrical friction member (220). The stationary pressure element (230) and the slidable pressure element (240) may compress the cylindrical friction member (220) from its opposite convex sides. This embodiment promotes the even distribution of the force exerted on the friction member (220) from the stationary pressure element (230) and/or the slidable pressure element (240) resulting in a prolonged friction member (220). Additionally, the friction member (220) is more securely positioned between the stationary pressure element (230) and the slidable pressure element (240). In one version of this embodiment having the retainer protrusions (250), the retainer protrusions (250) may be positioned on at least one edge of the concave inner surface of the stationary pressure element (230) and/or the slidable pressure element (240).

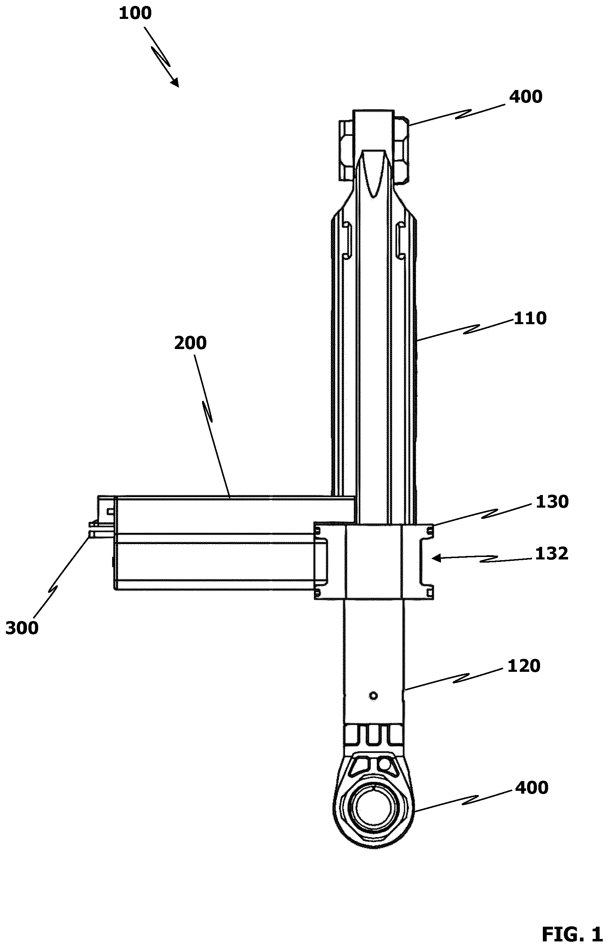

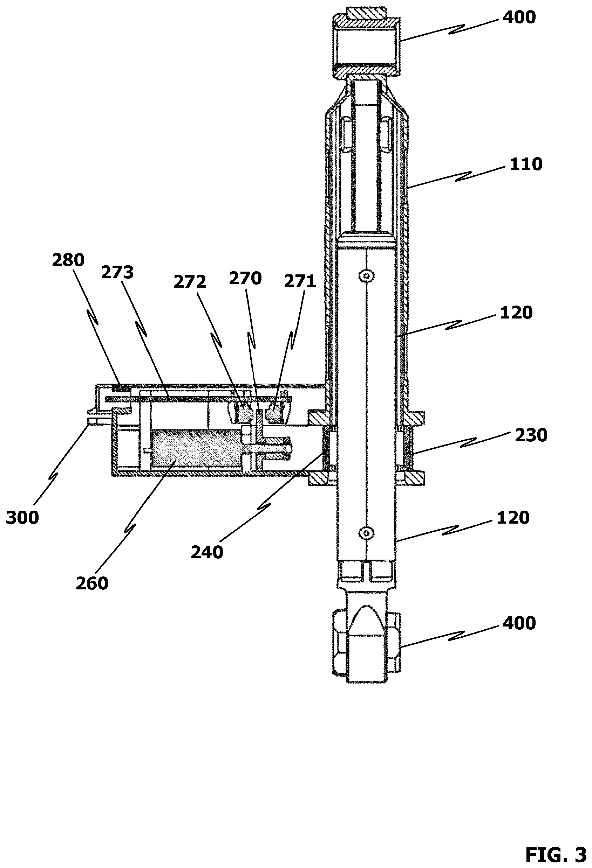

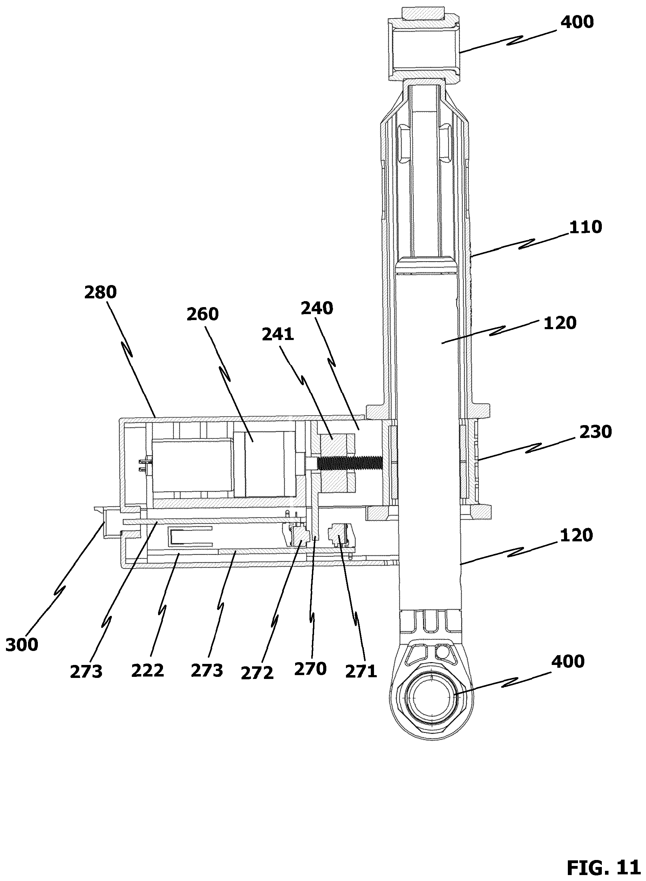

The connection member (300) (see Fig. 1, 3, 11) might be for connecting to a power unit for powering the linear actuator (260). The connection member (300) might also be for connecting a controlling unit for controlling (speed and/or direction) the motion of the linear actuator (260). The controlling unit might be in a form of or comprising a sensor such as a stroke sensor. The controlling feedbacking by sensors can dynamically adjust the damping force of the friction damper (100) by controlling the linear actuator (260).

In one embodiment of the invention, the linear actuator (260) comprises a linear motor wherein a linearly movable part of the linear motor is attached to the slidable pressure element (240). The linear motor inherently employs fewer mechanical linkage mechanisms to generate a linear motion which promotes its reliability. This makes the linear motor a good alternative for the linear actuator (260).

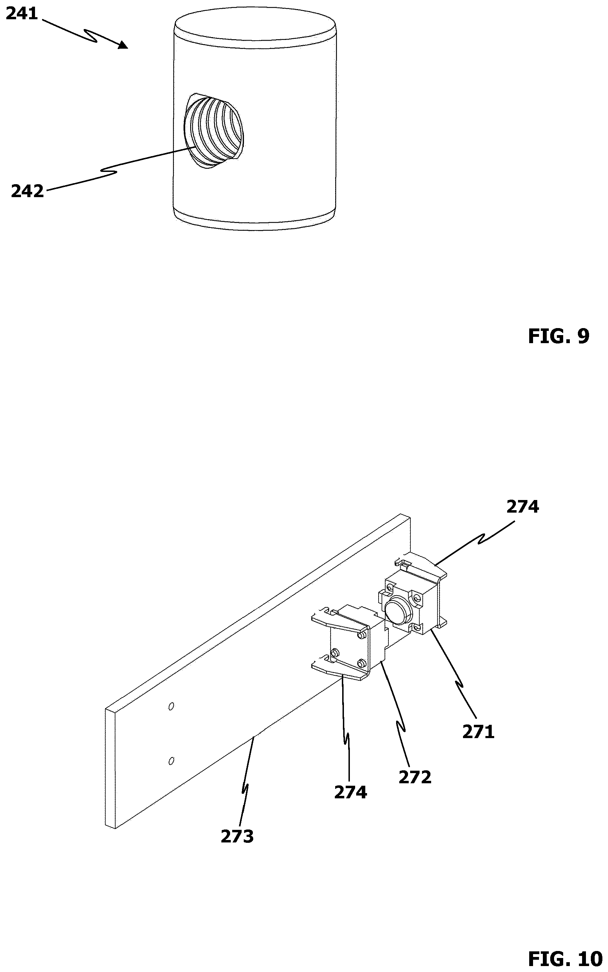

In one embodiment of the invention, the linear actuator (260) comprises a rotary motor. The rotary motor comprises a threaded rotor end (261) coupled with a travelling nut (241) fixed to the slidable pressure element (240). The threaded rotor end (261) is acting as a leadscrew. The threaded rotor end (261) coupled with the travelling nut (241) translates the turning motion of the rotary motor into linear motion. The threaded rotor end (261) might have continuous threads or helical grooves along its length. The thread might have a uniform pitch which is the distance between threads. The travelling nut (241) engages with the threads of the threaded rotor end (261). The travelling nut (241) might have internal threads (242) (see Fig. 9), ball bearings or rollers that match the threads of the threaded rotor end (261). The traveling nut (241) with internal threads (242) is preferred because the friction between the threads of the rotor end (261) and the internal threads (242) is sufficient to hold the traveling nut (241) and so the slidable pressure element (240) in its exact position even when the rotary motor is not powered/in operation. This frictional force helps to maintain the position of the slidable pressure element (240) and prevents any position displacement of the slidable pressure element (240) due to motion of the damping rod (120) when the rotary motor is not powered/in operation. The travelling nut (241) linearly moves along the length of the threaded rotor end (261) as it rotates. The direction of rotation of the threaded rotor end (261) determines the direction of linear motion of the slidable pressure element (240). For example, clockwise rotation of the threaded rotor end (261) might move the travelling nut (241) and so the slidable pressure element (240) towards the stationary pressure element (230), while counterclockwise rotation of the threaded rotor end (261) might move the travelling nut (241) and so the slidable pressure element (240) away from the stationary pressure element (230). As the threaded rotor end (261) continues to rotate, the travelling nut (241) moves along the length of the threaded rotor end (261). The linear displacement of the travelling nut (241) and so the slidable pressure element (240) is directly related to the number of rotations and the pitch of the threads on the threaded rotor end (261). For each full rotation, the travelling nut (241) moves a distance equal to the pitch of the threads of the threaded rotor end (261). The speed and precision of the linear motion can be controlled by adjusting the rotation speed and direction of the rotary motor. By varying the rotation speed and direction of the rotary motor, a precise control over the position and speed of the linear movement of the slidable pressure element (240) can be achieved. In this way, a precise control over the applied force on friction member (220) and so damping magnitude of the friction damper (100) can be achieved.

In one embodiment of the invention, the friction unit (200) comprises an actuator stopper assembly. The actuator stopper assembly comprises a first push-button switch (271) and a second push-button switch (272) and a push abutment (270). The push-button switch (281) might be in a form of a tact switch. The first push-button switch (271) and the second push-button switch (272) are facing each other (adapted) for stopping the linear actuator (260) when either of which is closed (pushed to the switches). The push abutment (270) is protruding from the slidable pressure element (240) through a place between the first push-button switch (271) and the second push-button switch (272). The push abutment (270) is for abutting and closing the first push-button switch (271) and the second push-button switch (272) at two corresponding selected position of the slidable pressure element (240). The push abutment (270) is positioned on the slidable pressure element (240) and might be an integral part of the slidable pressure element (240). When the slidable pressure element (240) slides towards the stationary pressure element (230) via the linear actuator (260), the push abutment (270) abuts and push/close the first push-button switch (271) at one selected position of the slidable pressure element (240). Closing the first push-button switch (271) stops the motion of the linear actuator (260) and thus the slidable pressure element (240). The first push-button switch (271) prevents the slidable pressure element (240) from sliding any further towards the stationary pressure element (230). This stopped position of the slidable pressure element (240) (a max-position of the slidable pressure element (240)) determines a maximum exerted pressure on the friction member (220) and thus maximum damping force of the friction damper (100). Similarly, when the slidable pressure element (240) slides away from the stationary pressure element (230) via the linear actuator (260), the push abutment (270) abuts and push/close the second push-button switch (272) at one selected position of the slidable pressure element (240). Closing the second push-button switch (272) stops the motion of the linear actuator (260) and thus the slidable pressure element (240). The second push-button switch (272) prevents the slidable pressure element (240) from sliding any further away from the stationary pressure element (230). This stopped position of the slidable pressure element (240) (a min-position of the slidable pressure element (240)) determines a minimum exerted pressure on the friction member (220) and thus minimum damping force of the friction damper (100).

The position of the slidable pressure element (240) on its sliding pathway inside the unit body (210) determines the magnitude of the applied pressure force on the friction member (220). The position of the slidable pressure element (240) on the sliding pathway can be altered by the linear actuator (260). The linear actuator (260) can slide and position the slidable pressure element (240) towards or away from the stationary pressure element (230). After a position of the slidable pressure element (240) is set, the slidable pressure element (240) saves its position without need powering the linear actuator (260).

In one alternative embodiment of this embodiment, the first push-button switch (271) is closer than the second push-button switch (272) to the stationary pressure element (230). The distance between the first push-button switch (271) and the stationary pressure element (230) is adjustable. Alternatively, the distance between both the first push-button switch (271) and the second push-button switch (272) and the stationary pressure element (230) is adjustable.

It is desired that at certain cycles of the washing or drying machine, such as high-speed spinning, the damping force of the friction damper (100) is at a maximum or a minimum level. However, due to the nature of the production of the friction member (220), and or the friction unit (200), the desired friction force of the friction member (220) on the damping rod (120) is achieved at slightly different position of the slidable pressure element (240) on its sliding pathway. Thus, the slidable pressure element (240) should be positioned/stopped at different selected position for achieving the maximum such as 120N or a minimum level such as 0N. For this reason, in the assembly process of the friction damper (100), the friction member (220) is compressed by sliding/pushing the slidable pressure element (240) toward the stationary pressure element (230) via the linear actuator (260). When the selected maximum damping force is achieved, the linear actuator (260) and so the slidable pressure element (240) is stopped. The selected maximum damping force may be set 120N. This is a max-position of the slidable pressure element (240) required for achieving the selected maximum damping force. Then, the position of the first push-button switch (271) is adjusted and secured such that the first push-button switch (271) is pushed and closed by the push abutment (270) at the max-position of the slidable pressure element (240). In other words, the push abutment (270) is abutted to the slidable pressure element (240) at the max-position of the slidable pressure element (240). This ensures an easy stop for the linear actuator (260) at the desired max-position which sets friction damper (100) into the selected maximum damping force. In a similar way, In the assembly process of the friction damper (100), the friction member (220) is relaxed between the slidable pressure element (240) and the stationary pressure element (230) by sliding/pushing the slidable pressure element (240) away from the stationary pressure element (230) via linear actuator (260). When the selected minimum damping force is achieved, the linear actuator (260) and so the slidable pressure element (240) is stopped. This is a min-position of the slidable pressure element (240) required for achieving the selected minimum damping force. The selected minimum damping force may be set 0N. Then, the position of the second push-button switch (272) is adjusted and secured such that the second push-button switch (272) is pushed and closed by the push abutment (270) at the min-position of the slidable pressure element (240). In other words, the push abutment (270) is abutted to the slidable pressure element (240) at the min-position of the slidable pressure element (240). This ensures an easy stop for the linear actuator (260) at the desired min-position which sets friction damper (100) into the selected minimum damping force. The adjustability of the distance between the second push-button switch (272) and the stationary pressure element (230) is optional. For example, for 0N minimum damping force, the minimum damping force remains at 0N for any position of the slidable pressure element (240) where the distance between the slidable pressure element (240) and the stationary pressure element (230) exceeds the distance between the min-position of the slidable pressure element (240) and the stationary pressure element (230). However, the min-position of the slidable pressure element (240) ensures the fastest transition between the min-position and max-position of the slidable pressure element (240).

In one alternative embodiment of this embodiment, the actuator stopper assembly comprises at least one circuit board (273) on which the first push-button switch (271) and/or the second push-button switch (272) is positioned. The first push-button switch (271) and the second push-button switch (272) can be located on separate individual circuit boards (273) or on a single circuit board (273).This embodiment provides easy positioning and/or fixing of the first push-button switch (271) and/or the second push-button switch (272). In one alternative embodiment of this embodiment, the circuit board (273) is slidable over the unit body (210). In this embodiment, the position of the first push-button switch (271) and/or the second push-button switch (272) can be changed by sliding the circuit board (273) the over the unit body (210).

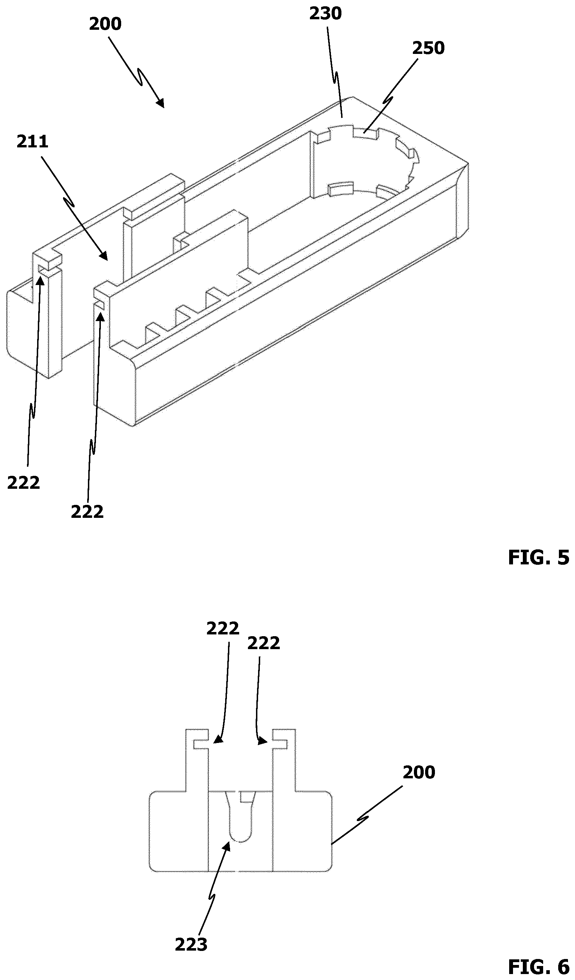

In one embodiment of the invention, the unit body (210) comprises a board guide (222) for supporting the circuit board (273) during the sliding motion of the circuit board (273) (see Fig. 5-6, 14-15).

For this embodiment, in the assembly process of the friction damper (100), the position of the first push-button switch (271) is adjusted and secured by sliding the circuit board (273) over the unit body (210) providing that the first push-button switch (271) is pushed and closed by the push abutment (270) at the max-position of the slidable pressure element (240). The slidable circuit board (273) facilitates the ease of adjusting and readjusting the first push-button switch (271). Similarly, the position of the second push-button switch (272) is adjusted and secured by sliding the circuit board (273) over the unit body (210) providing that the second push-button switch (272) is pushed and closed by the push abutment (270) at the min-position of the slidable pressure element (240). The slidable circuit board (273) facilitates the ease of adjusting and readjusting the second push-button switch (272).

In the embodiment of the invention, the friction unit (200) comprises an outer cover (280) covering at least a part of the friction unit (200). The outer cover (280) protects the friction unit (200) from any external shock. In one embodiment of the invention, the outer cover (280) and unit body (210) comprises a cover fastener (281). The cover fastener (281) might be in a form of a snap-fit fastener wherein the unit body (210) has at least one cantilever and the outer cover (280) has at least one corresponding locking hole. In an alternative of this embodiment, at least one part of the outer cover (280) is slidable together with at least one circuit board (273). In this embodiment, the position of the circuit board (273) and thus the first push-button switch (271) and/or the second push-button switch (272) can be adjusted by sliding the part of the outer cover (280).

In the embodiment of the invention, circuit board (273) comprises at least one switch bracket (274) for providing a support to the first push-button switch (271) and/or the second push-button switch (272). The switch bracket (274) provides that the first push-button switch (271) and/or the second push-button switch (272) is positioned orthogonal to the circuit board (273) and facing each other.

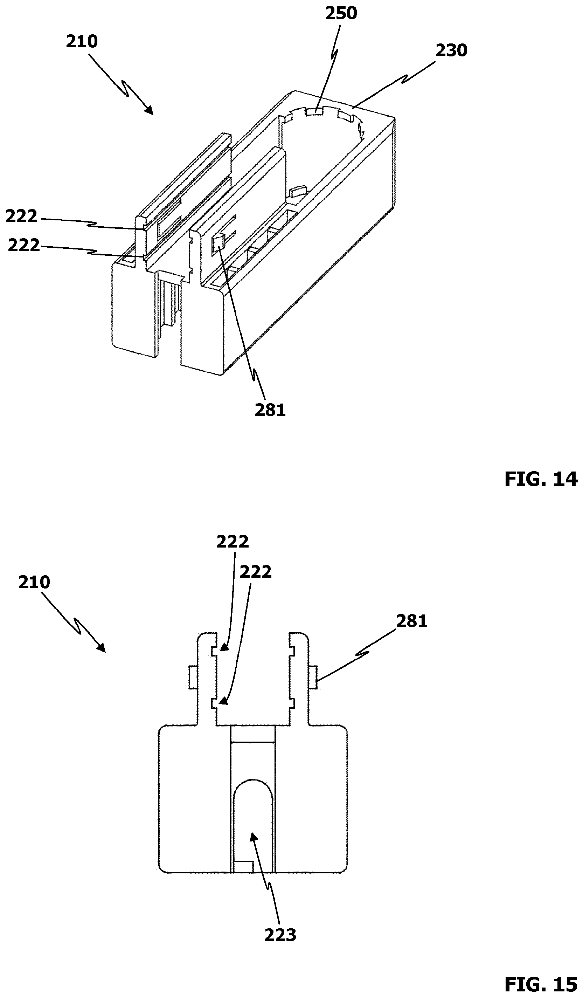

In one embodiment of the invention, the unit body (210) comprises an actuator housing (211) for securing the fixed position of the linear actuator (260) in the unit body (210). The actuator housing (211) might comprise a rotor end inlet (223) (see Fig. 6 and 15) providing an opening for threaded rotor end (261) to reach and couple with the travelling nut (241) of the slidable pressure element (240).

In an exemplary embodiment of the invention, the friction damper (100) might comprise an anchoring member (400) for fastening the friction damper (100) to a washing or drying machine.

## Claims

1. A friction damper (100) for washing or drying machines **comprising;**
- a tubular hollow body (110) and a damping rod (120) arranged coaxially with respect to one another for moving along each other telescopically, wherein the damping rod (120) has an outer diameter less than an inner diameter of the hollow body (110);
- the hollow body (110) comprises a holder (130) for holding a friction unit (200);
**characterised in that**
- the friction unit (200) comprises a unit body (210); at least one friction member (220) inside the unit body (210) to which the damping rod (120) is slidably coupled for generating a friction force onto the damping rod (120); a stationary pressure element (230) surrounding at least a part of the friction member (220); a slidable pressure element (240) for surrounding at least another part of the friction member (220); wherein providing that the friction member (220) is positioned between the stationary pressure element (230) and the slidable pressure element (240) and the slidable pressure element (240) is slidable towards and away from the stationary pressure element (230) for exerting a pressure to the friction member (220); a linear actuator (260) fixed to the unit body (210) for providing a sliding motion to the slidable pressure element (240); a connection member (300) for powering the linear actuator (260).

2. The friction damper (100) for washing or drying machines according claim 1, wherein the stationary pressure element (230) and/or the slidable pressure element (240) comprises retainer protrusions (250) providing that the friction member (220) is secured between the stationary pressure element (230) and the slidable pressure element (240).

3. The friction damper (100) for washing or drying machines according to any of the preceding claims, wherein the holder (130) is positioned at one end of the tubular hollow body (110) and comprises a circular opening (131) for receiving the damping rod (120); at least one side opening (132) for receiving the friction unit (200).

4. The friction damper (100) for washing or drying machines according to any of the preceding claims, wherein the friction member (220) has a cylindrical form; the stationary pressure element (230) and/or the slidable pressure element (240) have a concave inner surface facing the friction member (220) wherein the contour of the concave inner surface is match with a convex outer surface of the cylindrical friction member (220).

5. The friction damper (100) for washing or drying machines according to any of the preceding claims, wherein the linear actuator (260) comprises a linear motor wherein a linearly movable part of the linear motor is attached to the slidable pressure element (240).

6. The friction damper (100) for washing or drying machines according claim 1 to 4, wherein the linear actuator (260) comprises a rotary motor wherein the rotary motor comprises a threaded rotor end (261) coupled with a travelling nut (241) fixed to the slidable pressure element (240).

7. The friction damper (100) for washing or drying machines according to any of the preceding claims, the friction unit (200) comprises an actuator stopper assembly wherein the actuator stopper assembly comprises a first push-button switch (271) and a second push-button switch (272) facing each other for stopping the linear actuator (260) when either of which is closed; a push abutment (270) protruding from the slidable pressure element (240) through a place between the first push-button switch (271) and the second push-button switch (272).

8. The friction damper (100) for washing or drying machines according claim 7, wherein the first push-button switch (271) is closer than the second push-button switch (272) to the stationary pressure element (230); and the distance between the first push-button switch (271) or both the first push-button switch (271) and the second push-button switch (272) and the stationary pressure element (230) is adjustable.

9. The friction damper (100) for washing or drying machines according to claim 7 or 8, wherein the actuator stopper assembly comprises at least one circuit board (273) on which the first push-button switch (271) and/or the second push-button switch (272) is positioned.

10. The friction damper (100) for washing or drying machines according to claim 9, wherein the circuit board (273) is slidable over the unit body (210).

11. The friction damper (100) for washing or drying machines according to claim 10, wherein the unit body (210) comprises a board guide (222) for supporting the circuit board (273) during the sliding motion of the circuit board (273).

12. The friction damper (100) for washing or drying machines according claim 10 or 11, wherein the friction unit (200) comprises an outer cover (280) covering at least a part of the friction unit (200); at least one part of the outer cover (280) is slidable together with at least one circuit board (273).

13. The friction damper (100) for washing or drying machines according any of claim 9 to 12, wherein circuit board (273) comprises at least one switch bracket (274) for providing a support to the first push-button switch (271) and/or the second push-button switch (272) such that the first push-button switch (271) and/or the second push-button switch (272) is positioned orthogonal to the circuit board (273) and facing each other.

14. The friction damper (100) for washing or drying machines according to any of the preceding claims, wherein the unit body (210) comprises an actuator housing (211) for securing the fixed position of the linear actuator (260) in the unit body (210).

## Patentansprüche

1. Reibungsdämpfer (100) für Wasch- oder Trocknungsmaschinen, **umfassend:**
- einem röhrenförmigen Hohlkörper (110) und einer Dämpfungsstange (120), die koaxial zueinander angeordnet sind, um sich teleskopartig entlangeinander zu bewegen, wobei die Dämpfungsstange (120) einen Außendurchmesser aufweist, der kleiner ist als ein Innendurchmesser des Hohlkörpers (110) aufweist;
- der Hohlkörper (110) eine Halterung (130) zum Halten einer Reibungseinheit (200) umfasst;
**dadurch gekennzeichnet, dass**
- die Reibungseinheit (200) einen Einheitskörper (210) umfasst; mindestens ein Reibungselement (220) innerhalb des Einheitskörpers (210), mit dem die Dämpfungsstange (120) verschiebbar gekoppelt ist, um eine Reibungskraft auf die Dämpfungsstange (120) auszuüben; ein stationäres Druckelement (230), das mindestens einen Teil des Reibungselements (220) umgibt; ein verschiebbares Druckelement (240) zum Umgeben mindestens einen weiteren Teil des Reibungselements (220) zu umgeben; wobei das Reibungselement (220) zwischen dem stationären Druckelement (230) und dem verschiebbaren Druckelement (240) positioniert ist und das verschiebbare Druckelement (240) in Richtung auf das stationäre Druckelement (230) zu und von diesem weg verschiebbar ist, um einen Druck auf das Reibungselement (220) auszuüben; einen Linearantrieb (260), der an dem Einheitskörper (210) befestigt ist, um eine Gleitbewegung des verschiebbaren Druckelement (240) zu erzeugen; ein Verbindungselement (300) zum Antreiben des Linearantrieb (260) anzutreiben.

2. Reibungsdämpfer (100) für Wasch- oder Trocknungsmaschinen gemäß Anspruch 1, wobei das stationäre Druckelement (230) und/oder das verschiebbare Druckelement (240) Haltevorsprünge (250) aufweist, die dafür sorgen, dass das Reibungselement (220) zwischen dem stationären Druckelement (230) und dem verschiebbaren Druckelement (240) fixiert ist.

3. Reibungsdämpfer (100) für Wasch- oder Trocknungsmaschinen nach einem der vorstehenden Ansprüche, wobei der Halter (130) an einem Ende des rohrförmigen Hohlkörpers (110) positioniert ist und eine kreisförmige Öffnung (131) zur Aufnahme der Dämpfungsstange (120) umfasst; mindestens eine seitliche Öffnung (132) zur Aufnahme der Reibungseinheit (200).

4. Reibungsdämpfer (100) für Wasch- oder Trocknungsmaschinen nach einem der vorstehenden Ansprüche, wobei das Reibungselement (220) eine zylindrische Form aufweist; das stationäre Druckelement (230) und/oder das verschiebbare Druckelement (240) eine konkave Innenfläche aufweisen, die dem Reibungselement (220) zugewandt ist, wobei die Kontur der konkaven Innenfläche mit einer konvexen Außenfläche des zylindrischen Reibungselements (220) übereinstimmt.

5. Reibungsdämpfer (100) für Wasch- oder Trocknungsmaschinen gemäß einem der vorstehenden Ansprüche, wobei der Linearantrieb (260) einen Linearmotor umfasst, wobei ein linear beweglicher Teil des Linearmotors an dem verschiebbaren Druckelement (240) angebracht ist.

6. Reibungsdämpfer (100) für Wasch- oder Trocknungsmaschinen gemäß einem der Ansprüche 1 bis 4, wobei der Linearantrieb (260) einen Rotationsmotor umfasst, wobei der Rotationsmotor ein mit einem Gewinde versehenes Rotorende (261) umfasst, das mit einer am verschiebbaren Druckelement (240) befestigten Laufmutter (241) gekoppelt ist.

7. Reibungsdämpfer (100) für Wasch- oder Trocknungsmaschinen gemäß einem der vorstehenden Ansprüche, wobei die Reibungseinheit (200) eine Aktuator-Stoppvorrichtung umfasst, wobei die Aktuator-Stoppvorrichtung einen ersten Druckschalter (271) und einen zweiten Druckschalter (272) umfasst, die einander gegenüberliegen, um den Linearantrieb (260) anzuhalten, wenn einer von ihnen geschlossen ist; ein Druckanschlagelement (270), das aus dem verschiebbaren Druckelement (240) durch eine Stelle zwischen dem ersten Druckschalter (271) und dem zweiten Druckschalter (272) herausragt.

8. Reibungsdämpfer (100) für Wasch- oder Trocknungsmaschinen gemäß Anspruch 7, wobei der erste Druckschalter (271) näher am stationären Druckelement (230) liegt als der zweite Druckschalter (272); und der Abstand zwischen dem ersten Druckschalter (271) oder sowohl dem ersten Druckschalter (271) als auch dem zweiten Druckschalter (272) und dem stationären Druckelement (230) einstellbar ist.

9. Reibungsdämpfer (100) für Wasch- oder Trocknungsmaschinen gemäß Anspruch 7 oder 8, wobei die Aktuator-Stoppvorrichtung mindestens eine Leiterplatte (273) umfasst, auf der der erste Druckschalter (271) und/oder der zweite Druckschalter (272) positioniert ist.

10. Reibungsdämpfer (100) für Wasch- oder Trocknungsmaschinen gemäß Anspruch 9, wobei die Leiterplatte (273) über den Einheitskörper (210) verschiebbar ist.

11. Reibungsdämpfer (100) für Wasch- oder Trocknungsmaschinen gemäß Anspruch 10, wobei der Einheitskörper (210) eine Leiterplattenführung (222) zum Abstützen der Leiterplatte (273) während der Gleitbewegung der Leiterplatte (273) umfasst.

12. Reibungsdämpfer (100) für Wasch- oder Trocknungsmaschinen gemäß Anspruch 10 oder 11, wobei die Reibungseinheit (200) eine Außenabdeckung (280) umfasst, die mindestens einen Teil der Reibungseinheit (200) abdeckt; mindestens ein Teil der Außenabdeckung (280) zusammen mit mindestens einer Leiterplatte (273) verschiebbar ist.

13. Reibungsdämpfer (100) für Wasch- oder Trocknungsmaschinen gemäß einem der Ansprüche 9 bis 12, wobei die Leiterplatte (273) mindestens eine Schalterhalterung (274) umfasst, um den ersten Druckschalter (271) und/oder den zweiten Druckschalter (272) so zu stützen, dass der erste Druckschalter (271) und/oder der zweite Druckschalter (272) orthogonal zur Leiterplatte (273) und einander gegenüberliegend positioniert sind.

14. Reibungsdämpfer (100) für Wasch- oder Trocknungsmaschinen gemäß einem der vorstehenden Ansprüche, wobei der Einheitskörper (210) ein Aktuatorgehäuse (211) umfasst, um die feste Position des Linearantriebs (260) im Einheitskörper (210) zu sichern.

## Revendications

1. - Amortisseur à friction (100) pour lave-linges ou sèche-linges **comprenant** :
- un corps creux tubulaire (110) et une tige d'amortissement (120) disposés coaxialement l'un par rapport à l'autre pour se déplacer le long l'un de l'autre de manière télescopique, la tige d'amortissement (120) ayant un diamètre externe inférieur à un diamètre interne du corps creux (110) ;
- le corps creux (110) comprenant un support (130) pour maintenir une unité de friction (200) ;
**caractérisé par le fait que**
- l'unité de friction (200) comprend un corps d'unité (210) ; au moins un élément de friction (220) à l'intérieur du corps d'unité (210) auquel la tige d'amortissement (120) est couplée de manière coulissante pour générer une force de friction sur la tige d'amortissement (120) ; un élément de pression fixe (230) entourant au moins une partie de l'élément de friction (220) ; un élément de pression coulissant (240) pour entourer au moins une autre partie de l'élément de friction (220) ; étant prévu que l'élément de friction (220) soit positionné entre l'élément de pression fixe (230) et l'élément de pression coulissant (240) et que l'élément de pression coulissant (240) soit apte à coulisser vers et à l'opposé de l'élément de pression fixe (230) pour exercer une pression sur l'élément de friction (220) ; un actionneur linéaire (260) fixé au corps d'unité (210) pour fournir un mouvement de coulissement à l'élément de pression coulissant (240) ; un élément de connexion (300) pour l'alimentation de l'actionneur linéaire (260).

2. - Amortisseur à friction (100) pour lave-linges ou sèche-linges selon la revendication 1, dans lequel l'élément de pression fixe (230) et/ou l'élément de pression coulissant (240) comprend/comprennent des protubérances de retenue (250) assurant que l'élément de friction (220) soit fixé entre l'élément de pression fixe (230) et l'élément de pression coulissant (240).

3. - Amortisseur à friction (100) pour lave-linges ou sèche-linges selon l'une quelconque des revendications précédentes, dans lequel le support (130) est positionné à une extrémité du corps creux tubulaire (110) et comprend une ouverture circulaire (131) pour recevoir la tige d'amortissement (120) ; au moins une ouverture latérale (132) pour recevoir l'unité de friction (200).

4. - Amortisseur à friction (100) pour lave-linges ou sèche-linges selon l'une quelconque des revendications précédentes, dans lequel l'élément de friction (220) a une forme cylindrique ; l'élément de pression fixe (230) et/ou l'élément de pression coulissant (240) a/ont une surface interne concave faisant face à l'élément de friction (220), le contour de la surface interne concave correspondant à une surface externe convexe de l'élément de friction cylindrique (220).

5. - Amortisseur à friction (100) pour lave-linges ou sèche-linges selon l'une quelconque des revendications précédentes, dans lequel l'actionneur linéaire (260) comprend un moteur linéaire, une partie mobile linéairement du moteur linéaire étant attachée à l'élément de pression coulissant (240).

6. - Amortisseur à friction (100) pour lave-linges ou sèche-linges selon les revendications 1 à 4, dans lequel l'actionneur linéaire (260) comprend un moteur rotatif, le moteur rotatif comprenant une extrémité de rotor filetée (261) couplée à un écrou de déplacement (241) fixé à l'élément de pression coulissant (240).

7. - Amortisseur à friction (100) pour lave-linges ou sèche-linges selon l'une quelconque des revendications précédentes, dans lequel l'unité de friction (200) comprend un ensemble d'arrêt d'actionneur, l'ensemble d'arrêt d'actionneur comprenant un premier commutateur à bouton-poussoir (271) et un second commutateur à bouton-poussoir (272) se faisant face pour arrêter l'actionneur linéaire (260) lorsque l'un ou l'autre d'entre eux est fermé ; une butée de poussée (270) faisant saillie à partir de l'élément de pression coulissant (240) à travers un emplacement situé entre le premier commutateur à bouton-poussoir (271) et le second commutateur à bouton-poussoir (272).

8. - Amortisseur à friction (100) pour lave-linges ou sèche-linges selon la revendication 7, dans lequel le premier commutateur à bouton-poussoir (271) est plus proche que le second commutateur à bouton-poussoir (272) de l'élément de pression fixe (230) ; et la distance entre le premier commutateur à bouton-poussoir (271) ou à la fois le premier commutateur à bouton-poussoir (271) et le second commutateur à bouton-poussoir (272) et l'élément de pression fixe (230) est réglable.

9. - Amortisseur à friction (100) pour lave-linges ou sèche-linges selon la revendication 7 ou 8, dans lequel l'ensemble d'arrêt d'actionneur comprend au moins une carte de circuits (273) sur laquelle le premier commutateur à bouton-poussoir (271) et/ou le second commutateur à bouton-poussoir (272) est/sont positionné(s).

10. - Amortisseur à friction (100) pour lave-linges ou sèche-linges selon la revendication 9, dans lequel la carte de circuits (273) est coulissante sur le corps d'unité (210).

11. - Amortisseur à friction (100) pour lave-linges ou sèche-linges selon la revendication 10, dans lequel le corps d'unité (210) comprend un guide de carte (222) pour porter la carte de circuits (273) pendant le mouvement de coulissement de la carte de circuits (273).

12. - Amortisseur à friction (100) pour lave-linges ou sèche-linges selon la revendication 10 ou 11, dans lequel l'unité de friction (200) comprend un couvercle externe (280) recouvrant au moins une partie de l'unité de friction (200) ; au moins une partie du couvercle externe (280) est coulissante conjointement avec au moins une carte de circuits (273).

13. - Amortisseur à friction (100) pour lave-linges ou sèche-linges selon l'une quelconque des revendications 9 à 12, dans lequel la carte de circuits (273) comprend au moins un support de commutateur (274) pour fournir un support au premier commutateur à bouton-poussoir (271) et/ou au second commutateur à bouton-poussoir (272) de telle sorte que le premier commutateur à bouton-poussoir (271) et/ou le second commutateur à bouton-poussoir (272) est/sont positionné(s) orthogonalement à la carte de circuits (273) et en face l'un de l'autre.

14. - Amortisseur à friction (100) pour lave-linges ou sèche-linges selon l'une quelconque des revendications précédentes, dans lequel le corps d'unité (210) comprend un boîtier d'actionneur (211) pour assurer la position fixe de l'actionneur linéaire (260) dans le corps d'unité (210).
